# EUROPÄISCHE PATENTANMELDUNG

(11) **EP 4 406 805 A1**
(43) Veröffentlichungstag der Anmeldung: **31.07.2024**
(21) Anmeldenummer: 23220756.3
(22) Anmeldetag: 29.12.2023
(51) Int. Cl.: B61C 3/00, B61C 17/00, B60H 1/26

(54) **VERBESSERTE EINSPEISUNG EINES KÜHLMEDIUMS**

(30) Priorität: 24.01.2023 DE 102023200543
(71) Anmelder: Siemens Mobility GmbH, 81739 München (DE)
(72) Erfinder: Gageik, Manuel, 47918 Tönisvorst (DE); Rodriguez Ahlert, Carlos-Jose, 52538 Gangelt (DE)
(74) Vertreter: Siemens Patent Attorneys

(57) **Zusammenfassung**

Die Erfindung betrifft einen Fluidkanal (10) einer Kühlvorrichtung (12) eines Fahrzeugs (14). Dieser Fluidkanal (10) weist eine Eintrittsöffnung (16) auf, welche eine Fahrzeugau-ßenhaut (18) des Fahrzeugs (14) durchdringt und durch welche ein Kühlmedium in den Fluidkanal (10) einspeisbar ist (102). Zudem ist eine Fluidleitvorrichtung (20) vorgesehen, welche in dem Fluidkanal (10) angeordnet ist.

## Beschreibung

Die Erfindung betrifft einen Fluidkanal einer Kühlvorrichtung eines Fahrzeugs, ein schienengebundenes Fahrzeug mit dem erfindungsgemäßen Fluidkanal sowie ein Verfahren zum Einspeisen eines Kühlmediums mittels des erfindungsgemäßen Fluidkanals.

Zum Zwecke eines Abtransports einer Wärmeenergie aus einem Fahrzeug ist es bereits bekannt, ein Kühlmedium aus einer Umgebung des Fahrzeugs in eine Kühlvorrichtung einzuspeisen. Die Kühlvorrichtung weist üblicherweise einen Wärmetauscher auf, mittels welchem Abwärme des Fahrzeugs an das Kühlmedium übertragbar ist. Das mittels des Wärmetauschers erwärmte Kühlmedium wird daraufhin zurück in eine Umgebung des Fahrzeugs abgegeben. Des Weiteren sind bereits verschiedene Anordnungsmöglichkeiten von Eintrittsöffnungen eines Fluidkanals zum Zwecke einer Einspeisung des Kühlmediums bekannt. Zweckmäßigerweise werden solche Eintrittsöffnungen an einer Stirnseite eines Fahrzeugs angeordnet. Eine solche Anordnung ist jedoch insbesondere für schienengebundene Fahrzeuge ungeeignet, da diese in zwei Fahrtrichtungen betrieben werden. Bei sich bewegenden Fahrzeugen besteht insbesondere das Problem, einen an wechselnde Anforderungen angepassten Volumenstrom des Kühlmediums bereitzustellen. Im Falle eines stehenden Fahrzeugs kann der Volumenstrom auf einfache Weise mittels eines Ventilators gesteuert werden. Um eine Beschädigung des Ventilators im Falle von hohen Fahrzeuggeschwindigkeiten zu vermeiden, ist es bereits bekannt, eine Eintrittsöffnung des Fluidkanals derart auszurichten, dass diese von einer Stirnseite des Fahrzeugs abgewandt ist. Zwar kann auf diese Weise eine unmittelbare Belastung des Ventilators verhindert werden, jedoch kann es bei hohen Fahrzeuggeschwindigkeiten aufgrund einer hohen Strömungsgeschwindigkeit des Kühlmediums zu einer lokal begrenzten Anströmung des Ventilators oder gar zu einer Unterbrechung eines Volumenstroms des einzuspeisenden Kühlmediums kommen. Als Folge kann unter Umständen kein ausreichender Volumenstrom des Kühlmediums bereitgestellt werden. Dies stellt eine erhebliche Gefahr für eine Betriebssicherheit des Fahrzeugs dar. Ferner wird durch eine ungleichmäßige lokale Anströmung des Ventilators ein Verschleiß desselben erhöht. Daneben können auf diese Weise Vibrationen erzeugt werden, welche sich insbesondere negativ auf eine Lebensdauer von Lagern auswirkt. Bislang wird diesem Problem dadurch entgegengetreten, dass ein großes Volumen für die Eintrittsöffnung vorgesehen wird. Dieses Volumen dient dem Zweck, dass sich eine turbulente Strömung des in die Eintrittsöffnung eintretenden Kühlmediums beruhigt. Allerdings erfordert dies einen großen Bauraum.

Aufgabe der Erfindung ist es, eine Einspeisung eines Kühlmediums in eine Kühlvorrichtung eines Fahrzeugs zu verbessern.

Diese Aufgabe wird gelöst durch einen Fluidkanal gemäß den Merkmalen des Anspruchs 1. Des Weiteren wird diese Aufgabe gelöst durch ein Verfahren gemäß den Merkmalen des nebengeordneten Verfahrensanspruchs.

Vorteilhafte Weiterbildungen der Erfindung können jeweils abhängigen Unteransprüchen entnommen werden.

Der erfindungsgemäße Fluidkanal einer Kühlvorrichtung eines Fahrzeugs weist eine Eintrittsöffnung auf, welche eine Fahrzeugaußenhaut des Fahrzeugs durchdringt. Durch die Eintrittsöffnung ist ein Kühlmedium in den Fluidkanal einspeisbar. Des Weiteren weist der Fluidkanal eine Fluidleitvorrichtung auf. Diese Fluidleitvorrichtung ist in dem Fluidkanal angeordnet. Vorzugsweise ist die genannte Fluidleitvorrichtung in der Eintrittsöffnung des Fluidkanals angeordnet. Besonders bevorzugt bildet die Fluidleitvorrichtung sowie die Eintrittsöffnung eine Stirnseite des Fluidkanals. Bei dem genannten Fluidkanal handelt es sich um einen umfangsseitig begrenzten Raum zum Zwecke einer Leitung eines Fluids. Dabei ist denkbar, dass der Fluidkanal einen runden, einen eckigen, einen ovalen, einen elliptischen und/oder einen polygonen Querschnitt aufweist.

Auf diese Weise kann ein Bauraum kleingehalten werden. Des Weiteren wird es so ermöglicht, eine Einspeisung des Kühlmediums mit verbesserten aerodynamischen Eigenschaften zu realisieren.

Eine vorteilhafte Weiterbildung sieht vor, dass die Eintrittsöffnung derart angeordnet ist, dass diese die Fahrzeugaußenhaut an einer Fahrzeugoberseite durchdringt. Vorzugsweise durchdringt die Eintrittsöffnung eine Dachhaut des Fahrzeugs. Dies ermöglicht es, ein Kühlmedium im Falle einer hohen äußeren Strömungsgeschwindigkeit des Kühlmediums, beispielsweise aufgrund einer hohen Fahrgeschwindigkeit des Fahrzeugs, zuverlässig in den Fluidkanal einzuspeisen.

Des Weiteren sieht eine vorteilhafte Weiterbildung vor, dass die Eintrittsöffnung derart angeordnet ist, dass diese die Fahrzeugaußenhaut in einer Richtung im Wesentlichen senkrecht zur Fahrtrichtung durchdringt. Ein mit steigender Fahrzeuggeschwindigkeit ansteigender Volumenstrom des Kühlmediums kann so vermieden werden.

Ferner sieht eine vorteilhafte Ausführungsvariante vor, dass die Eintrittsöffnung derart angeordnet ist, dass diese die Fahrzeugaußenhaut in einer Richtung im Wesentlichen senkrecht zur Fahrtrichtung sowie in vertikaler Richtung durchdringt. Auf diese Weise kann ein Eintrag von Fremdstoffen oder Schmutz und Staubpartikeln in den Fluidkanal reduziert werden. Bevorzugt durchdringt die Eintrittsöffnung die Fahrzeugaußenhaut mittig bezogen auf eine Breite des Fahrzeugs.

Eine andere vorteilhafte Weiterbildung sieht vor, dass die Eintrittsöffnung mittels der Fluidleitvorrichtung in mehrere Eintrittszonen unterteilt ist. Dies ermöglicht es, ein verbessertes Strömungsverhalten des eingespeisten Kühlmediums innerhalb des Fluidkanals zu erreichen. Zudem kann auf diese Weise einer Verringerung eines Volumenstroms oder gar ein Abriss einer Strömung des Volumenstroms des Kühlmediums zuverlässig entgegengewirkt werden.

In einer weiteren vorteilhaften Weiterbildung wird vorgeschlagen, dass die Fluidleitvorrichtung mehrere Fluidleitelemente aufweist. So können einfach und flexibel an unterschiedliche Bedürfnisse angepasste Eintrittszonen geschaffen werden.

Eine vorteilhafte Ausführungsvariante sieht vor, dass die mehreren Fluidleitelemente, betrachtet in einer Ebene, welche sich im Wesentlichen senkrecht zur Eintrittsöffnung erstreckt, jeweils gekrümmt ausgebildet sind. Beispielsweise kann es sich dabei um gekrümmte Stege oder gekrümmte Lamellen handeln. Eine Geometrie der Krümmung und eine Ausdehnung der Fluidleitelemente, betrachtet in der Ebene, welche sich im Wesentlichen senkrecht zur Eintrittsöffnung erstreckt, können bedarfsgerecht an einen Einsatzzweck des Fahrzeugs angepasst werden. Beispielhaft können die Fluidleitelemente derart gekrümmt ausgebildet sein, dass diese eine kreisförmige, ovale, elliptische, quadratische, rechteckige oder polygone Geometrie sowie Kombinationen daraus aufweisen. So kann eine effiziente und aufwandsgünstige Umlenkung einer Strömungsrichtung des Kühlmediums realisiert werden. Ferner kann so ein Luftwiderstand der Fluidleitvorrichtung kleingehalten werden.

Eine weitere vorteilhafte Ausführungsvariante sieht vor, dass die mehreren Fluidleitelemente, betrachtet in einer Ebene, welche sich im Wesentlichen parallel zur Eintrittsöffnung erstreckt, jeweils gekrümmt ausgebildet sind. Eine Betriebssicherheit der Kühlvorrichtung kann auf diese Weise erhöht werden. Trotz einer Ablenkung einer Strömungsrichtung des Kühlmediums kann dennoch ein konstanter Volumenstrom des Kühlmediums eingespeist werden. Des Weiteren können die genannten Fluidleitelemente so kompakt und gewichtssparend angeordnet werden. Auf eine aktive Umstellung einer Ausrichtung der Fluidleitelemente kann einfach verzichtet werden.

Als weitere vorteilhafte Ausführungsvariante wird vorgeschlagen, dass die mehreren Fluidleitelemente, betrachtet in einer Ebene, welche sich im Wesentlichen parallel zur Eintrittsöffnung erstreckt, jeweils einen geschlossenen Umfang aufweisen. Dies ermöglicht es, einen Volumenstrom im Falle einer Umkehr einer Fahrtrichtung des Fahrzeugs, einer Kurvenfahrt mit hoher Geschwindigkeit oder äußeren Einflüssen, wie Seitenwind, auf einfache Weise aufrechtzuerhalten.

In einer weiteren vorteilhaften Ausführungsvariante wird vorgeschlagen, dass die mehreren Fluidleitelemente kreisförmig ausgebildet sind. Dies ermöglicht es, einen zuverlässigen Volumenstrom zum Zwecke einer Einspeisung in die Kühlvorrichtung bereitzustellen. Alternativ ist denkbar, dass die mehreren Fluidleitelemente jeweils oval, elliptisch, rechteckig, quadratisch, polygon oder aus Kombinationen der genannten Geometrien ausgebildet sind.

Ferner sieht eine Ausführungsvariante vor, dass die mehreren Fluidleitelemente konzentrisch zueinander angeordnet sind. Dies ermöglicht eine symmetrische Anordnung der Fluidleitelemente. Des Weiteren kann so eine zuverlässige Einspeisung des Kühlmediums weitestgehend unabhängig von einer Strömungsrichtung des Kühlmediums erreicht werden.

Darüber hinaus sieht eine vorteilhafte Ausführungsvariante vor, dass die mehreren Fluidleitelemente derart in der Eintrittsöffnung angeordnet sind, dass diese eine zentrale Eintrittszone begrenzen. Auf diese Weise kann ein Kühlmedium sowohl bei geringen Fahrgeschwindigkeiten des Fahrzeugs als auch bei hohen Fahrgeschwindigkeiten des Fahrzeugs bedarfsgerecht eingespeist werden.

In einer vorteilhaften Weiterbildung wird vorgeschlagen, dass ein schienengebundenes Fahrzeug den erfindungsgemäßen Fluidkanal aufweist. Dies ermöglicht es, Abwärme des schienengebundenen Fahrzeugs mittels des eingespeisten Kühlmediums bei hohen Geschwindigkeiten dieses Fahrzeugs zuverlässig abzuführen. So kann ein sicherer Betrieb des schienengebundenen Fahrzeugs sowohl bei Kurvenfahrten mit hoher Geschwindigkeit als auch bei starkem Seitenwind bereitgestellt werden.

In einer anderen vorteilhaften Weiterbildung wird vorgeschlagen, dass stromabwärts der Fluidleitvorrichtung ein Ventilator im Fluidkanal angeordnet ist. Insbesondere ist der Ventilator dazu eingerichtet, ein Kühlmedium zu fördern. Vorzugsweise ist der Ventilator dazu eingerichtet, ein Kühlmedium durch die Eintrittsöffnung anzusaugen. Eine einseitige Belastung des Ventilators durch einen lokal konzentrierten Volumenstrom des Kühlmediums kann so einfach reduziert werden.

Des Weiteren wird als vorteilhafte Weiterbildung vorgeschlagen, dass ein Wärmetauscher stromabwärts der Fluidleitvorrichtung angeordnet ist. Vorzugsweise ist zwischen der Fluidleitvorrichtung und dem Wärmetauscher der vorgenannte Ventilator angeordnet.

Mittels des erfindungsgemäßen Fluidkanals ist das erfindungsgemäße Verfahren durchführbar.

Bei dem erfindungsgemäßen Verfahren wird ein Kühlmedium in eine Kühlvorrichtung eines Fahrzeugs mittels des erfindungsgemäßen Fluidkanals eingespeist. Dabei handelt es sich bei dem genannten Kühlmedium, bei der genannten Kühlvorrichtung sowie bei dem genannten Fahrzeug insbesondere um das bereits im Zusammenhang mit dem Fluidkanal beschriebene Kühlmedium, um die bereits im Zusammenhang mit dem Fluidkanal beschriebene Kühlvorrichtung sowie um das bereits im Zusammenhang mit dem Fluidkanal beschriebene Fahrzeug.

In verschiedenen Fahrsituationen des Fahrzeugs kann so ein Abtransport von Wärmeenergie aus dem Fahrzeug betriebssicher und zuverlässig ermöglicht werden.

Eine vorteilhafte Weiterbildung des Verfahrens sieht vor, dass mittels einer im vorgenannten Fluidkanal angeordneten Fluidleitvorrichtung eine äußere Fluidströmung entlang einer Fahrzeugaußenhaut in eine Richtung hin zum Fahrzeuginnenraum umgelenkt wird. Vorzugsweise wird die äußere Fluidströmung entlang einer Fahrzeugaußenhaut um einen Winkel von im Wesentlichen 90° umgelenkt. Bei der genannten Fluidleitvorrichtung handelt es sich insbesondere um die bereits zuvor beschriebene Fluidleitvorrichtung des Fluidkanals. Wärme kann so zuverlässig sowohl bei niedrigen als auch bei hohen Geschwindigkeiten des Fahrzeugs mittels des eingespeisten Kühlmediums abtransportiert werden. Ferner kann eine ungleichmäßige Anströmung eines stromabwärts der Fluidleitvorrichtung angeordneten Ventilators reduziert werden.

Eine vorteilhafte Ausführungsvariante sieht vor, dass mittels der Fluidleitvorrichtung eine äußere Fluidströmung entlang einer Fahrzeugaußenhaut in eine Richtung im Wesentlichen senkrecht zur Fahrtrichtung umgelenkt wird. Ein Abriss eines Volumenstroms im Falle hoher Fahrzeuggeschwindigkeiten kann so einfach verhindert werden.

Des Weiteren sieht eine vorteilhafte Weiterbildung des Verfahrens vor, dass die genannte äußere Fluidströmung mittels gekrümmter Fluidleitelemente der Fluidleitvorrichtung in einer Richtung hin zu einem Fahrzeuginnenraum des Fahrzeugs umgelenkt wird. Dies ermöglicht es, einen hohen Volumenstrom im Falle von hohen Fahrzeuggeschwindigkeiten bei geringem Luftwiderstand der Fluidleitvorrichtung bereitzustellen.

Ferner sieht eine vorteilhafte Weiterbildung des Verfahrens vor, dass die genannte äußere Fluidströmung mittels konzentrisch angeordneter Fluidleitelemente der Fluidleitvorrichtung in eine Richtung hin zu einem Fahrzeuginnenraum des Fahrzeugs umgelenkt wird. Eine Einspeisung des Kühlmediums kann auf diese Weise weitestgehend unabhängig von einer Strömungsrichtung des Kühlmediums erfolgen. Damit kann eine hohe Betriebssicherheit bereitgestellt werden.

Die voranstehend beschriebenen Eigenschaften, Merkmale und Vorteile der Erfindung sowie die Art und Weise, wie diese erreicht werden, werden im Zusammenhang mit den Figuren in der folgenden Beschreibung der Erfindung näher erläutert. Soweit zweckdienlich, werden in den Figuren dieselben Bezugszeichen für dieselben oder einander entsprechende Elemente der Erfindung verwendet. Das Ausführungsbeispiel und dessen Variationen dienen der Erläuterung der Erfindung und beschränken die Erfindung nicht auf die darin angegebenen Kombinationen von Merkmalen, auch nicht in Bezug auf funktionale Merkmale. Zudem können alle in den Ausführungsbeispielen angegebenen Merkmale isoliert betrachtet und in geeigneter Weise mit den Merkmalen eines beliebigen Anspruchs kombiniert werden.

Es zeigen:
- FIG 1: ein Ausführungsbeispiel eines schienengebundenen Fahrzeugs in einer schematischen Darstellung, welches einen erfindungsgemäßen Fluidkanal aufweist;
- FIG 2: eine schematische Darstellung eines Ausführungsbeispiels des erfindungsgemäßen Fluidkanals;
- FIG 3: eine schematische Schnittdarstellung des erfindungsgemäßen Fluidkanals in einer Ebene, welche sich senkrecht zu einer Eintrittsöffnung des Fluidkanals erstreckt;
- FIG 4: eine schematische Illustration eines Beispiels des erfindungsgemäßen Verfahrens.

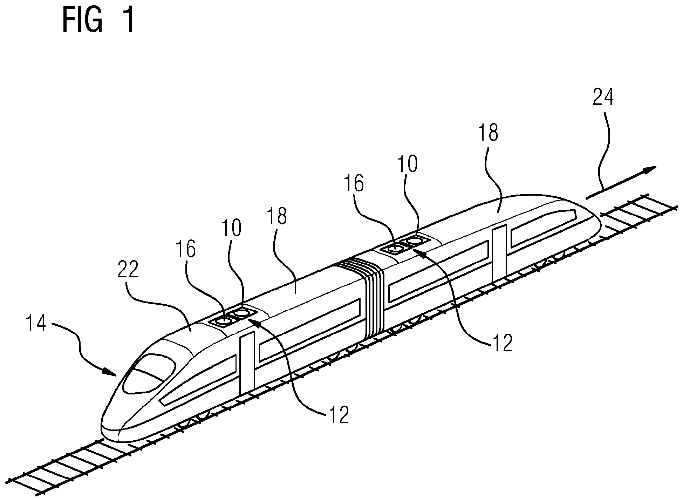

FIG 1 zeigt eine schematische Darstellung eines schienengebundenen Fahrzeugs 14. Das Fahrzeug 14 bewegt sich beispielhaft in eine Fahrtrichtung 24. Das Fahrzeug 14 weist beispielhaft zwei Kühlvorrichtungen 12 auf. Die Kühlvorrichtungen 12 sind jeweils dazu eingerichtet, eine Wärmeenergie aus dem Fahrzeug 14 abzutransportieren. Diese Wärmeenergie stammt üblicherweise von raumlufttechnischen Anlagen, von einem Antrieb des Fahrzeugs 14 oder von elektrischen Bremswiderständen einer Bremsvorrichtung des Fahrzeugs 14. Zum Zwecke der Abfuhr der Wärmeenergie weisen die genannten Kühlvorrichtungen 12 jeweils zwei Fluidkanäle 10 auf. Beispielhaft sind die genannten Fluidkanäle 10 baugleich ausgebildet. Alternativ können diese jedoch auch voneinander verschieden ausgebildet sein.

Jeder der Fluidkanäle 10 weist eine Eintrittsöffnung 16 auf. Durch die Eintrittsöffnungen 16 wird ein Kühlmedium in den Fluidkanal 10 eingespeist 102. Als Kühlmedium wird beispielhaft eine Umgebungsluft in den Fluidkanal 10 eingespeist 102. Denkbar ist jedoch jedes beliebige Fluid. Zu diesem Zweck durchdringen die Eintrittsöffnungen 16 jeweils eine Fahrzeugaußenhaut 18 des Fahrzeugs 14. Die Eintrittsöffnungen 16 bilden dabei jeweils ein stirnseitiges Ende eines zugehörigen Fluidkanals 10.

Des Weiteren durchdringen die genannten Eintrittsöffnungen 16 im vorliegenden Ausführungsbeispiel die Fahrzeugaußenhaut 18 an einer Fahrzeugoberseite 22. Zudem sind die Eintrittsöffnungen 16 jeweils derart angeordnet, dass diese die Fahrzeugaußenhaut 18 in einer Richtung durchdringen, welche im Wesentlichen senkrecht zur Fahrtrichtung 24 sowie in vertikaler Richtung ausgerichtet ist. Besonders vorteilhaft durchdringen die Eintrittsöffnungen 16 die Fahrzeugaußenhaut 18 in einem mittleren Bereich der Fahrzeugoberseite 22 bezogen auf eine Breite des Fahrzeugs 14. Auf diese Weise kann ein Eintrag von Fremdstoffen in den Fluidkanal 10 kleingehalten werden.

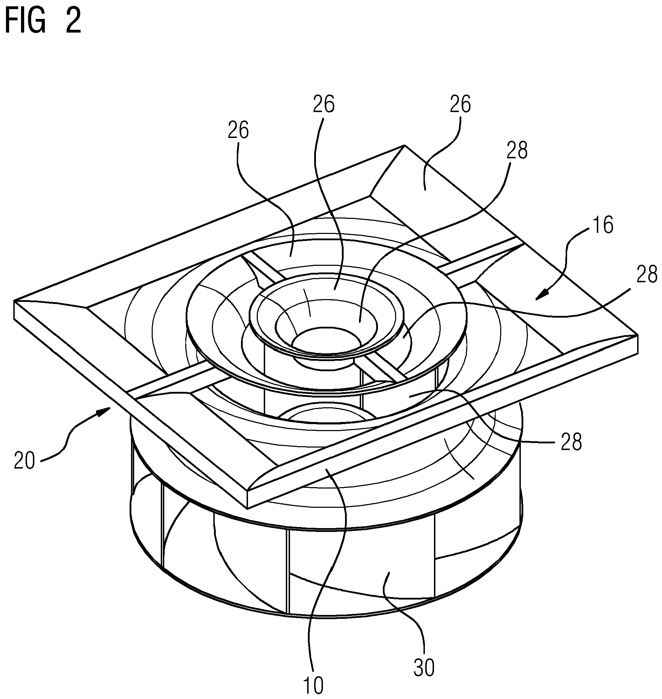

FIG 2 zeigt eine perspektivische Darstellung eines Abschnitts des Fluidkanals 10 in einer schematischen Darstellung. In der Eintrittsöffnung 16 des Fluidkanals 10 ist eine Fluidleitvorrichtung 20 angeordnet. Zudem zeigt FIG 2 beispielhaft einen Ventilator 30, welcher stromabwärts der Fluidleitvorrichtung 20 in dem Fluidkanal 10 angeordnet ist. Der Ventilator 30 ist dazu eingerichtet, das Kühlmedium durch die Eintrittsöffnung 16 hin zu einem nicht näher dargestellten Wärmetauscher der Kühlvorrichtung 12 zu fördern. Ein Abtransport des Kühlmediums und damit einer Wärmeenergie erfolgt auf eine dem Fachmann bekannte Weise.

Die Eintrittsöffnung 16 des Fluidkanals 10 ist mittels der genannten Fluidleitvorrichtung 20 in verschiedene Eintrittszonen 28 unterteilt. Zu diesem Zweck weist die Fluidleitvorrichtung 20 vorliegend drei Fluidleitelemente 26 auf. Ein äu-ßeres Fluidleitelement 26 ist, betrachtet in einer Ebene parallel zu der Eintrittsöffnung 16, rechteckeckig geformt und umlaufend geschlossen ausgebildet. Die weiteren zwei Fluidleitelemente 26 weisen, betrachtet in einer Ebene, welche sich parallel zur Eintrittsöffnung 16 erstreckt, eine Kreisringform mit unterschiedlichen inneren und äußeren Durchmessern auf. Ferner sind im vorliegenden Ausführungsbeispiel die drei genannten Fluidleitelemente 26 konzentrisch angeordnet. Auf diese Weise ist die Eintrittsöffnung 16 mittels der Fluidleitvorrichtung 20 in drei Eintrittszonen 28 unterteilt. Dabei begrenzt das zentrale kreisringförmige Fluidleitelement 26 eine zentrale Eintrittszonen 28, durch welche das Kühlmedium in den Fluidkanal 10 einspeisbar ist 102.

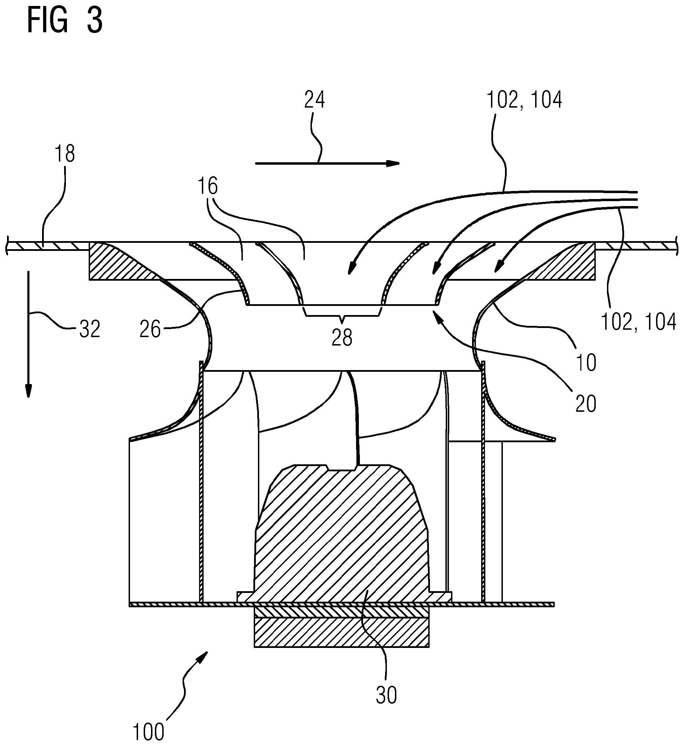

FIG 3 zeigt eine Schnittdarstellung des in FIG 2 gezeigten Abschnitts des Fluidkanals 10 in einer Ebene, welche sich senkrecht zur Eintrittsöffnung 16 erstreckt. Beispielhaft ist der genannte Abschnitt des Fluidkanals 10 in einem montierten Zustand gezeigt. Dabei durchdringt die Eintrittsöffnung 16 des Fluidkanals 10 die Fahrzeugaußenhaut 18. Insbesondere handelt es sich bei der Fahrzeugaußenhaut 18 um die des in Zusammenhang mit FIG 1 beschriebenen schienengebundenen Fahrzeugs 14, welches sich in Fahrtrichtung 24 bewegt. Zudem illustriert FIG 3 ein Beispiel eines Verfahrens 100, bei welchem das Kühlmedium in die Kühlvorrichtung 12 des Fahrzeugs 14 mittels des zuvor beschriebenen Fluidkanals 10 eingespeist wird 102.

Als Kühlmedium wird beispielhaft eine Umgebungsluft in den Fluidkanal 10 eingespeist 102. Zu diesem Zweck wird mittels der genannten Fluidleitvorrichtung 20 eine äußere Fluidströmung der Umgebungsluft entlang der Fahrzeugaußenhaut 18 in eine Richtung 32 hin zu einem nicht näher dargestellten Fahrzeuginneren des Fahrzeugs 14 umgelenkt 104. Dabei kann die Fluidströmung durch eine Fahrgeschwindigkeit, eine Fahrtrichtung oder äußere Einflüsse, wie Wind, bedingt sein. Die genannte Umlenkung erfolgt mittels der Fluidleitvorrichtung 20 und den zuvor beispielhaft beschriebenen drei Fluidleitelementen 26. Mithilfe der Fluidleitelemente 26 wird die äußere Fluidströmung in einen Teil der vorbeschriebenen Eintrittszonen 28 umgelenkt 104. Zu diesem Zweck sind die Fluidleitelemente 26 in der in FIG 3 dargestellten Ebene gekrümmt ausgebildet. Je nach Einsatzzweck kann eine Krümmung sowie eine Erstreckung der Fluidleitelemente 26 in der in FIG 3 betrachteten Ebene bedarfsgerecht angepasst werden. Dabei kann jedes Fluidleitelement 26 eine im Vergleich zu den übrigen Leitelementen 26 verschiedene Krümmung oder davon verschiedene Krümmungsabschnitte aufweisen. So kann beispielsweise in Abhängigkeit einer Fahrgeschwindigkeit eine Abschaltung eines Betriebs des Ventilators 30 in Betracht gezogen werden. Insbesondere kann auf diese Weise eine lokal beschränkte Anströmung des Ventilators 30 verringert werden. Dies ermöglicht es, einen Verschleiß des Ventilators 30 zu verringern und darüber hinaus eine Energieeffizienz der Kühlvorrichtung 12 zu steigern.

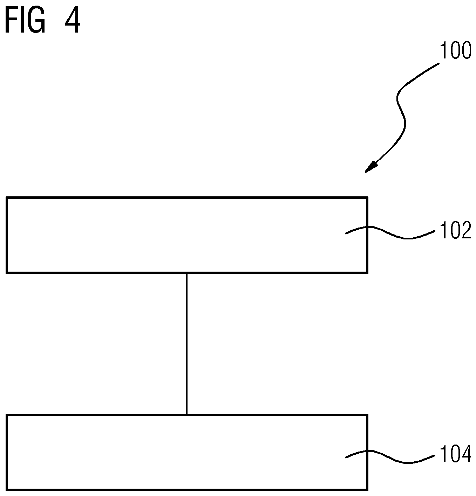

FIG 4 illustriert das im Zusammenhang mit FIG 3 beschriebene Beispiel des Verfahrens 100 in einer schematischen Darstellung.

Obwohl die Erfindung im Detail durch das bevorzugte Ausführungsbeispiel und die darin genannten Variationen davon näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Fluidkanal (10) einer Kühlvorrichtung (12) eines Fahrzeugs (14) aufweisend
- eine Eintrittsöffnung (16), welche eine Fahrzeugaußenhaut (18) des Fahrzeugs (14) durchdringt und durch welche ein Kühlmedium in den Fluidkanal (10) einspeisbar (102) ist;
- eine Fluidleitvorrichtung (20), welche in dem Fluidkanal (10) angeordnet ist.

2. Fluidkanal (10) nach Anspruch 1,
**dadurch gekennzeichnet, dass**
die Eintrittsöffnung (16) derart angeordnet ist, dass diese die Fahrzeugaußenhaut (18) an einer Fahrzeugoberseite (22) durchdringt.

3. Fluidkanal (10) nach einem der Ansprüche 1 oder 2, **dadurch gekennzeichnet, dass**
die Eintrittsöffnung (16) derart angeordnet ist, dass diese die Fahrzeugaußenhaut (18) in einer Richtung im Wesentlichen senkrecht zur Fahrtrichtung (24) durchdringt.

4. Fluidkanal (10) nach einem der vorhergehenden Ansprüche, **dadurch gekennzeichnet, dass**
die Eintrittsöffnung (16) mittels der Fluidleitvorrichtung (20) in mehrere Eintrittszonen (28) unterteilt ist.

5. Fluidkanal (10) nach einem der vorhergehenden Ansprüche, **dadurch gekennzeichnet, dass**
die Fluidleitvorrichtung (20) mehrere Fluidleitelemente (26) aufweist.

6. Fluidkanal (10) nach Anspruch 5,
**dadurch gekennzeichnet, dass**
die mehreren Fluidleitelemente (26), betrachtet in einer Ebene, welche sich im Wesentlichen senkrecht zur Eintrittsöffnung (16) erstreckt, jeweils gekrümmt ausgebildet sind.

7. Fluidkanal (10) nach einem der Ansprüche 5 oder 6, **dadurch gekennzeichnet, dass**
die mehreren Fluidleitelemente (26), betrachtet in einer Ebene, welche sich im Wesentlichen parallel zur Eintrittsöffnung (16) erstreckt, jeweils gekrümmt ausgebildet sind.

8. Fluidkanal (10) nach Anspruch 7,
**dadurch gekennzeichnet, dass**
die mehreren Fluidleitelemente (26), betrachtet in einer Ebene, welche sich im Wesentlichen parallel zur Eintrittsöffnung (16) erstreckt, jeweils einen geschlossenen Umfang aufweisen.

9. Fluidkanal (10) nach einem der Ansprüche 7 oder 8,
**dadurch gekennzeichnet, dass**
die mehreren Fluidleitelemente (26) jeweils kreisförmig ausgebildet sind sowie konzentrisch zueinander angeordnet sind.

10. Fluidkanal (10) nach einem der Ansprüche 7 bis 9,
**dadurch gekennzeichnet, dass**
die mehreren Fluidleitelemente (26) derart in der Eintrittsöffnung (16) angeordnet sind, dass diese eine zentrale Eintrittszone (28) bilden.

11. Schienengebundenes Fahrzeug (14) mit einem Fluidkanal (10) gemäß einem der vorhergehenden Ansprüche.

12. Verfahren (100),
bei welchem ein Kühlmedium in eine Kühlvorrichtung (12) eines Fahrzeugs (14) mittels des Fluidkanals (10) gemäß einem der Ansprüche 1 bis 10 eingespeist wird (102).

13. Verfahren (100) nach Anspruch 12,
bei welchem mittels einer im vorgenannten Fluidkanal (10) angeordneten Fluidleitvorrichtung (20) eine äußere Fluidströmung entlang einer Fahrzeugaußenhaut (18) in eine Richtung (32) hin zu einem Fahrzeuginnenraum des Fahrzeugs (14) umgelenkt wird (104).

14. Verfahren (100) nach Anspruch 13,
bei welchem die genannte äußere Fluidströmung mittels gekrümmter Fluidleitelemente (26) der Fluidleitvorrichtung (20) in eine Richtung (32) hin zu einem Fahrzeuginnenraum des Fahrzeugs (14) umgelenkt wird (104).

15. Verfahren (100) nach Anspruch 13 oder 14,
bei welchem die genannte äußere Fluidströmung mittels konzentrisch angeordneter Fluidleitelemente (26) der Fluidleitvorrichtung (20) in eine Richtung (32) hin zu einem Fahrzeuginnenraum des Fahrzeugs (14) umgelenkt wird (104).
